Europäisches Patentamt

European Patent Office

Office européen des brevets

(19)

(11) **EP 0 790 947 B1**

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(51) Int Cl.7: **B65G 47/31**, B65G 43/08

(21) Anmeldenummer: **96928305.0**

(86) Internationale Anmeldenummer:
**PCT/CH96/00305**

(22) Anmeldetag: **05.09.1996**

(87) Internationale Veröffentlichungsnummer:
**WO 97/009256 (13.03.1997 Gazette 1997/12)**

(54) **VERFAHREN UND VORRICHTUNG ZUM EINSCHLEUSEN VON STÜCKGUTTEILEN**

METHOD AND DEVICE FOR TRANSFERRING ARTICLES

PROCEDE ET DISPOSITIF DE TRANSFERT D'OBJETS

(84) Benannte Vertragsstaaten:
**AT BE CH DE DK ES FI FR GB IT LI LU NL SE**

(30) Priorität: **08.09.1995 CH 256095**

(43) Veröffentlichungstag der Anmeldung:
**27.08.1997 Patentblatt 1997/35**

(73) Patentinhaber:
• **Siemens Schweiz AG**
**8047 Zürich (CH)**
• **SIEMENS AKTIENGESELLSCHAFT**
**80333 München (DE)**

(72) Erfinder:
• **GRETENER, Urs**
**CH-5300 Ennetturgi (CH)**
• **HEINZ, Beat**
**CH-7411 Sils im Domleschg (CH)**
• **RYKART, Ruedi**
**CH-5046 Schmidrued (CH)**

(74) Vertreter: **Fischer, Michael, Dr. et al**
**Siemens AG,**
**Postfach 22 16 34**
**80506 München (DE)**

(56) Entgegenhaltungen:
**EP-A- 0 527 542** **EP-A- 0 577 021**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung nach dem Oberbegriff des Patentanspruchs 1 bzw. 9.

Zum Sortieren von Stückgutteilen, z.B. für den Paketversand in Postbetrieben, werden Sortieranlagen eingesetzt wie sie z.B. aus der EP-A-0 305 755, der EP-A-0 343 613 oder der EP-A-0 619 248 bekannt sind. Derartige Sortieranlagen, die eine nahezu vollautomatische Verteilung eintreffenden Stückguts an verschiedene Abnehmer erlauben, weisen wenigstens einen Abnahmeförderer auf, auf dem das zu verteilende Stückgut mit Hilfe wenigstens einer Einschleusvorrichtung plaziert wird, die einen Abgabeförderer aufweist. Das mit Zieladressen versehene Stückgut wird auf dem Abnahmeförderer bis zu einer mit der Zieladresse des Stückgutteiles übereinstimmenden Ausschleusvorrichtung transportiert. Durch das Ausschleusen des Stückgutteils an dessen Bestimmungsort wird der Förderplatz wiederum frei zum erneuten Beschicken mit einem Stückgutteil durch die Einschleusvorrichtung. Aufgrund der stetigen Zunahme der Güterströme im Stückgutbereich sowie der hohen Investitionskosten für Sortieranlagen wird für diese Anlagen ein hoher Güterdurchsatz angestrebt. Die Erzielung eines hohen Güterdurchsatzes bedingt primär eine jeweils sehr exakte Positionierung der Stückgutteile auf dem Abnahmeförderer. Werden Stückgutteile durch die Einschleusvorrichtung nicht präzise auf dem Abnahmeförderer plaziert, können Störungen auftreten, die jeweils durch manuelle Eingriffe behoben werden müssen. An Vorrichtungen, die zum Einschleusen von in Grösse, Form und Gewicht unterschiedlichen Stückgutteilen verwendet werden, werden zudem besondere Anforderungen gestellt, damit die Stückgutteile jeweils exakt auf dem Abnahmeförderer positioniert werden. Dies gilt insbesondere bei der Verwendung von Kippschalensortieranlagen, bei denen die einzuschleusenden Stückgutteile auf Kippschalen zu plazieren sind. Bereits in der EP-A-0 305 755 wurde festgestellt, dass Stückgutteile, die bezüglich der Mittellinie des Abgabeförderers seitlich verschoben sind, ohne Korrektur auf den Kippschalen nicht präzise positioniert werden. Dieses Problem kann durch verschiedene Massnahmen gelöst werden. Da eine präzise Plazierung der Stückgutteile auf der Mittellinie des Abgabeförderers, wodurch das Problem gelöst wäre, nicht ohne anderweitige Nachteile erreicht werden kann, wird in den aus der EP-A-0 305 755, der EP-A-0 343 613 oder der EP-A-0 619 248 Lösungen der Zeitpunkt, zu dem ein Stückgutteil den Abnahmeförderer erreicht, in Abhängigkeit von dessen Position, relativ zur Mittellinie des Abgabeförderers gewählt. Durch die EP-A-0 305 755 wird mittels zwei sich in einem bestimmten Winkel schneidenden Lichtschranken eine Zählvorrichtung gesteuert, die in Abhängigkeit der Position der Stückgutteile beim Durchlaufen der Lichtschranken ein Zählergebnis abgibt, durch das eine dazu proportionale Verzögerung des ansonsten statisch ablaufenden Einschleusvorgangs bewirkt wird. Diese geforderte Verzögerung wird bei der EP-A-0 343 613, anstatt durch dieses Hinausschieben des Starts des Einschleusvorgangs, durch die Verwendung von zwei unterschiedlichen Geschwindigkeiten ($v_o / \sqrt{2}$) bzw. ($v_o * \sqrt{2}$) für den Abgabeförderer erzielt, die zeitlich in Abhängigkeit der Position der Stückgutteile entlang einer parallel zum Abnahmeförderer gerichteten Lichtschranke bzw. in Abhängigkeit der Position der Stückgutteile relativ zur Mittellinie des Abgabeförderers eingestellt werden. Anstelle eines von der Position des Stückgutteiles abhängigen Startzeitpunktes, wird beim zweiten Beispiel der Zeitpunkt zur Umschaltung zwischen zwei unterschiedlichen Geschwindigkeiten in Abhängigkeit von der Position des Stückgutteiles gewählt, um die erforderliche Verzögerung zu erzielen. Bei der zweiten Geschwindigkeit ($v_o * \sqrt{2}$) handelt es sich um die Geschwindigkeit, mit der die Stückgutteile auf den Abnahmeförderer eingeschleust werden (Einschleusgeschwindigkeit). Die erste Geschwindigkeit ($v_o / \sqrt{2}$), die zur Verzögerung des Stückgutteiles angewählt wird, ist daher immer tiefer als die Einschleusgeschwindigkeit. Bei den aus der EP-A-0 305 755 und der EP-A-0 343 613 bekannten Vorrichtungen wird daher jeweils eine Verzögerung bewirkt, die in Abhängigkeit der seitlichen Position des Stückgutteiles auf dem Abgabeförderer gewählt wird. Diese unabhängig von der Position der auf dem Abnahmeförderer vorgesehenen Kippschalen bewirkte Verzögerung dient daher ausschliesslich zur Kompensation von seitlichen Verschiebungen der Stückgutteile auf dem Abgabeförderer.

In der EP-A-0 619 248 werden die Stückgutteile vor der Beschleunigung entlang einer senkrecht zum Abnahmeförderer verlaufenden Lichtschranke bis zum Beginn des Einschleusvorganges angehalten. Die dadurch in Förderrichtung entstehende Verschiebung der Stückgutteile in Abhängigkeit von deren seitlicher Verschiebung auf dem Abgabeförderer bewirkt, dass bei einheitlicher Beschleunigung jedes Stückgutteil zeitrichtig beim Abnahmeförderer eintrifft.

Den Vorrichtungen gemäss der EP-A2-0 305 755 (s. Seite 5, Zeilen 37-42), der EP-A2-0 343 613 (Spalte 4, Zeilen 41-57) und der EP-A1-0 619 248 (Spalte 4, Zeilen 13-25) ist ferner gemeinsam, dass die Stückgutteile für die Zeitdauer angehalten werden, während der der Leitrechner den Abstand zur nächsten freien Kippschale ermittelt. Dadurch entstehen Unterbrüche innerhalb der Einschleusvorgänge, die eine deutliche Reduktion des Güterdurchsatzes bewirken. Verzögerungen ergeben sich ferner dadurch, dass die Stückgutteile nach dem Anhalten wieder aus dem Stillstand auf die Einschleusgeschwindigkeit beschleunigt werden müssen. Dadurch kann es geschehen, dass durch den Anhalte- sowie den Beschleunigungsvorgang eine noch freie Kippschale verpasst wird. Eine Vermeidung des Anhaltevorganges kann dabei unter Umständen nur vermieden werden, wenn sich eine freie Kippschale im passenden Abstand vom Übergabepunkt befindet.

In EP 0577 021 A1 wird eine Aufgabefördereinrichtung beschrieben, die aus einer Zufördereinrichtung und minimal zwei Synchronisierbändern besteht. Das Stückgut wird auf dem Zuförderband so getaktet, dass der Abstand des Stückgutes den freien Aufnahmeplätzen des Aufnahmeförderers entspricht. Die Positionierung erfolgt mit Hilfe von Lichtschranken. Durch Verwendung von drei Taktgebern kann die Position gegenüber den freien Aufnahmeplätzen des Aufnahmeförderers bestimmt werden. Durch Beschleunigung und Verzögerung kann das Stückgut mit den freien Plätzen des Aufnahmeförderers synchronisiert werden. Da die Synchronisation anhand von Vergleichen der Taktgeber erfolgt, muss eine Korrekturmöglichkeit vorgesehen werden. Gemäss diesem Verfahren können zwei Mal die Synchronisationswerte geändert werden. Das Stückgut wird mit einer vordefinierten Übergabegeschwindigkeit vü des Einschleusebandes an den freien Platz im Aufnahmeförderer abgegeben.

Der vorliegenden Erfindung liegt daher die Abgabe zugrunde, ein Verfahren und eine Vorrichtung zu schaffen, durch die Stückgutteile in Taktzyklen minimaler Länge von einem Abgabeförderer auf einen Abnahmeförderer eingeschleust werden können. Insbesondere sollen Totzeiten bei der Einschleusung der Stückgutteile vermieden werden, wenn sich freie Container oder Kippschalen nicht bereits dazu synchron auf dem Abnahmeförderer bewegen, unter Berücksichtigung des Aufwandes.

Diese Abgabe wird durch die im kennzeichnenden Teil des Patentanspruchs 1 bzw. 9 angegebenen Massnahmen gelöst. Vorteilhafte Ausgestaltungen der Erfindung sind in weiteren Ansprüchen angegeben.

Das erfindungsgemässe Verfahren und die Vorrichtung erlauben die Reduktion von störenden Totzeiten bei der Einschleusung von Stückgutteilen gleicher oder unterschiedlicher Grösse. Den Stückgutdurchsatz reduzierende Totzeiten können dabei nur noch auftreten, falls auf dem Abnahmeförderer über längere Zeit keine freien Kippschalen mehr zur Verfügung gestellt werden. Femer wird eine gezielte, von der Position der zu beladenden Kippschalen und der Grösse der Stückgutteile abhängige Beschleunigung des Einschleusvorganges bewirkt, die es ermöglicht, Stückgutteile mit freien Kippschalen bezüglich des Übergabezeitpunktes noch zu synchronisieren, die nach bekannten Verfahren nicht mehr erreicht werden könnten und ungenutzt auf dem Abnahmeförderer weitergeführt würden. Anstelle eines statischen Einschleusvorganges wird daher ein dynamisch auf die Stückgutteile und die Position der Kippschalen abgestimmter Vorgang durchgeführt, der es ertaubt, Stückgutteile in kürzester Zeit einzuschleusen. Die zur Durchführung des erfindungsgemässen Verfahrens vorgesehene Vorrichtung kann im Vergleich zu bekannten Vorrichtungen praktisch ohne Mehraufwand hergestellt werden.

Die Erfindung wird nachfolgend anhand einer Zeichnung beispielsweise näher erläutert. Dabei zeigt:

Fig. 1     einen zentralen Abnahmeförderer, auf den über einen mit einem Abrufband versehenen Abgabeförderer zugeführte Stückgutteile eingeschleust werden und

Fig. 2     die Vorrichtung gemäss Fig. 1 mit einem Abgabeförderer, der zwei Abrufbänder aufweist.

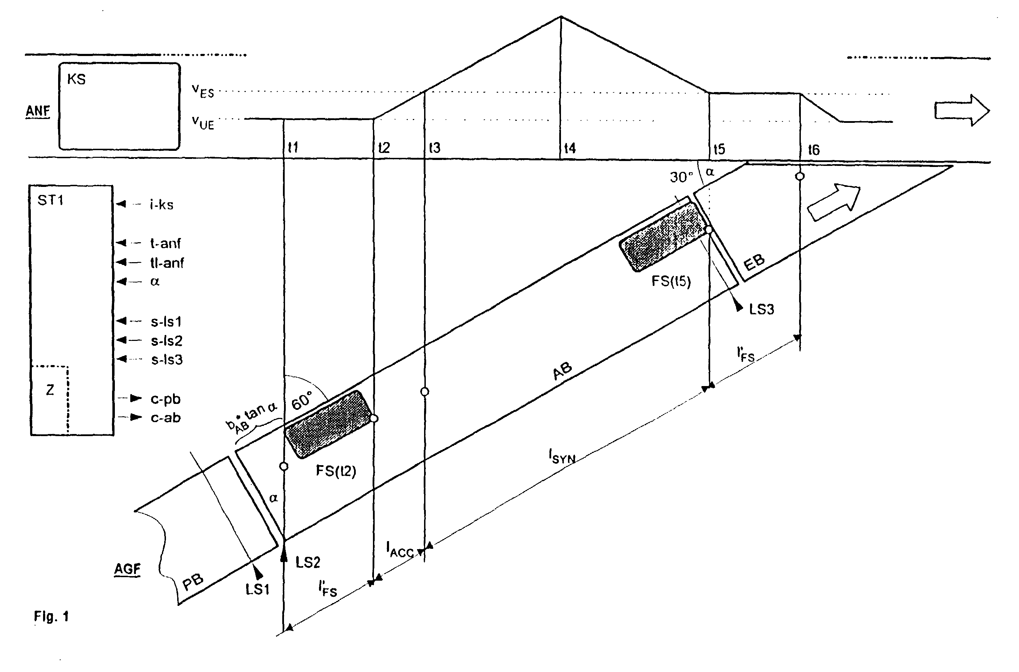

Fig. 1 zeigt einen aus einem Pufferband PB, einem Abrufband AB sowie einem Einschleusband EB bestehenden Abgabeförderer AGF, durch den Stückgutteile FS auf einen Abnahmeförderer ANF eingeschleust werden. Femer ist ein von einer Steuereinheit ST1 kontrollierter Einschleusvorgang für ein Stückgutteil FS sowie der Verlauf der Geschwindigkeit dargestellt, mit der das Stückgutteil FS durch den Abgabeförderer AGF transportiert wird. Das Stückgutteil FS soll nach erfolgtem Einschleusvorgang präzise in einem vom Abnahmeförderer ANF geführten ein- oder mehrteiligen Container bzw. in einer Kippschale KS plaziert werden. Falls das Stückgutteil FS frühzeitig bereitsteht, wird es vorzugsweise an der Vorderkante der Kippschale positioniert (Vorderkante des Stückgutteils FS an der Vorderkante der Kippschale KS), um den Abgabeförderer AGF so bald wie möglich zu leeren und für die Einschleusung eines weiteren Stückgutteils FS bereitzuhalten. Falls das Stückgutteil FS jedoch relativ spät vom Pufferband PB zum Abrufband AB übergeben wird, so erfolgt die Positionierung bevorzugt an der Hinterkante der Kippschale (Hinterkante des Stückgutteils FS an der Hinterkante der Kippschale KS). Um die Steuervorgänge zu vereinfachen, könnten die Stückgutteile FS jeweils auch in der Mitte der Kippschalen KS positioniert werden. Die Einschleusvorgänge mit entsprechender Positionierung der Stückgutteile FS könnten vorgenommen werden, indem die Stückgutteile FS im Bereich des Abrufbandes AB wie beim Stand der Technik an einer Stoplinie bereitgehalten und nach dem Erscheinen einer Kippschale KS an einer vorgesehenen Stelle auf Einschleusgeschwindigkeit beschleunigt werden. Dadurch entstehen Totzeiten, die beim erfindungsgemässen Einschleusverfahren vermieden werden.

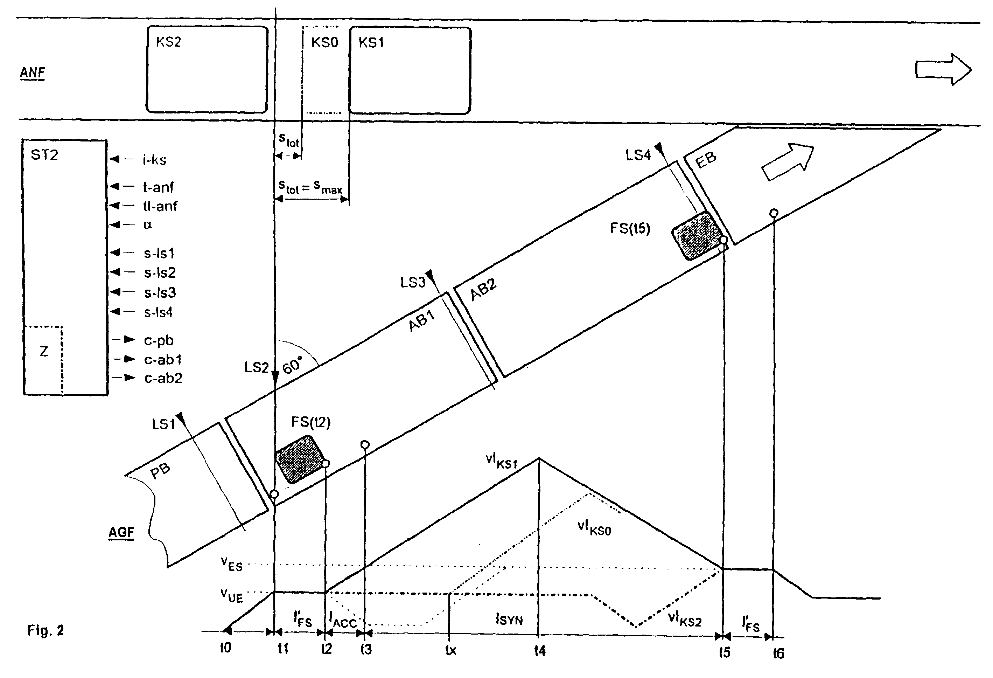

Erfindungsgemäss wird nämlich, ohne das Stückgutteil FS anzuhalten, zu einem bestimmten Zeitpunkt (t2) geprüft, wie lange das Stückgutteil FS entlang einer berechneten Synchronisationsstrecke $l_{SYN}$ auf dem Abrufband AB zu beschleunigen ist, damit die nächste freie Kippschale KS noch erreicht werden kann. Femer wird bevorzugt geprüft, ob das Stückgutteil FS noch an der Vorderkante, in der Mitte oder nur an der Hinterkante der Kippschale KS positioniert werden kann. Der Beschleunigungsvorgang erfolgt, nach Abschluss der Längenmessung, auf dem Abrufband AB. Der Verlauf der Geschwindigkeits des Abrufbandes AB, der in Fig. 1 und 2 im Diagramm dargestellt ist, stimmt mit der Geschwindigkeit des beförderten Stückgutteils FS überein, solange sich dieses auf dem Abrufband AB befindet.

Zur Durchführung der notwendigen Berechnungen sind der Steuereinheit ST1 die Information i-ks bezüglich der vorhandenen freien Kippschalen, Informationen t-anf, tl-anf (Taktrate und Schrittlänge pro Takt), bezüglich der Geschwindigkeit $V_{ANF}$ des Abnahmeförderers ANF, Informationen $\alpha$ bezüglich des vom Abgabeförderer AGF und dem Abnahmeförderer ANF eingeschlossenen Winkel sowie Informationen s-ls1, s-ls2, s-ls3 bezüglich der Position des einzuschleusenden Stückgutteils FS zuzuführen. Ferner muss der Steuereinheit ST1 die Länge $l_{AB}$ des Abrufbandes AB bekannt sein. Die Informationen s-ls1, s-ls2, s-ls3 bezüglich der Position des einzuschleusenden Stückgutteils FS werden der Steuereinheit ST1 von drei Lichtschranken LS1, LS2 und LS3 übermittelt. Die nachfolgend beschriebenen Berechnungen beziehen sich auf die Position eines Stückgutteils FS an der Lichtschranke LS2. Die erste Lichtschranke LS1 ist am Ende des Pufferbandes PB, orthogonal zu dessen Laufrichtung derart angeordnet, dass Stückgutteile FS, die an der Lichtschranke LS1 angehalten werden, zu Beginn des Einschleusvorganges auf die Geschwindigkeit $v_{UE}$ des Abrufbandes AB beschleunigt werden können, bevor sie an das Abrufband AB übergeben werden. Die zweite Lichtschranke LS2, die zur Längenmessung der Stückgutteile FS und als Ausgangspunkt für den Beschleunigungsvorgang vorgesehen ist, ist orthogonal zum Abnahmeförderer ANF angeordnet, um, wie eingangs beschrieben, Abweichungen der Stückgutteile FS von der Mittellinie des Abrufbandes AB bzw. des Abgabeförderers AGF zu kompensieren. Die nachstehend beschriebenen Berechnungen können daher unabhängig von der seitlichen Verschiebung eines Stückgutteils FS auf dem Abgabeförderer AGF durchgeführt werden.

Die mit einem Zähler Z versehene Steuereinheit ST1 (gilt auch für Fig. 2, ST2) ist daher zur Durchführung der Berechnungen und zur Steuerung des Abgabeförderers AGF bzw. der entsprechenden Bänder (Pufferband PB, Abrufbänder AB (AB1, AB2), das Einschleusband EB läuft bevorzugt konstant mit Einschleusgeschwindigkeit $v_{ES}$) vorgesehen. Dazu werden dem Abgabeförderer AGF von der Steuereinheit ST1 die Steuersignale c-pb, c-ab (c-ab1, c-ab2) zugeführt.

Nachfolgend wird die auf dem Abrufband AB zur Synchronisation der Stückgutteile FS zur Verfügung stehende Strecke $l_{SYN}$ ermittelt.

Die Längenmessung der Stückgutteile FS erfolgt, indem die Zeit gemessen wird, in der das mit Übernahmegeschwindigkeit $v_{UE}$ transportierte Stückgutteil FS die Lichtschranke LS2 durchläuft. (Durchlauf diagonal gegenüberliegender Ecken). Aus Fig. 1 ist ersichtlich, dass das am linken Rand des Abgabeförderers AGF transportierte Stückgutteil FS nach der Längenmessung bereits eine Strecke $b_{AB} * \tan \alpha$ auf dem Abrufband AB zurückgelegt hat ($b_{AB}$ = Breite des Abrufbandes AB). Diese Strecke steht zur Synchronisation des Stückgutteils FS mit einer Kippschale KS, die durch das Abrufband AB zu vollziehen ist, nicht mehr zur Verfügung.

Weiterhin reduziert sich die zur Synchronisation zur Verfügung stehende Strecke $l_{SYN}$ um die Strecke $l_{ACC}$, die vom Stückgutteil FS (in der Zeit $t_{ACC}$) zu durchlaufen ist, bis die Einschleusgeschwindigkeit $v_{ES}$ erreicht wird. Aufgrund der Differenz der Geschwindigkeiten $v_{UE}$ und $v_{ES}$ sowie einer vorgegebenen, vorzugsweise konstant gewählten Beschleunigung a kann die Beschleunigungsstrecke $l_{ACC}$ berechnet werden:

$$l_{ACC} = (v_{ES}^2 - v_{UE}^2)/2*a$$

Die Zeit $t_{ACC}$, die für diesen Beschleunigungsvorgang benötigt wird beträgt :

$$t_{ACC} = (v_{ES} - v_{UE}) / a$$

Zusätzlich reduziert sich die Synchronisationsstrecke etwa um die Länge $l'_{FS}$ des gemessenen Stückgutteils FS, da dieses beim Erreichen des Einschleusbandes EB bereits mit Einschleusgeschwindigkeit $v_{ES}$ geführt sein soll.

Bei näherer Betrachtung kann festgestellt werden, dass die gemessene Länge $l'_{FS}$ des Stückgutteils FS um den Wert $b_{FS} * \tan \alpha$ ($b_{FS}$ ist die Breite des Stückgutteils FS) reduziert werden kann; da der gemessene Wert bei gleicher Länge der Stückgutteile in Förderrichtung proportional zur Breite $b_{FS}$ des Stückgutteils FS ansteigt. Bei vorgegebener minimaler Breite $b_{FS}$ des Stückgutteils FS könnte daher die gemessene Länge $l'_{FS}$ in einer ersten Annäherung optimiert werden. Zur Schaffung einer Sicherheitsmarge wird dieser Korrekturwert vorzugsweise jedoch nicht in Abzug gebracht. Alternativ könnte die Längenmessung des Stückgutteils auch anhand der ersten orthogonal zum Pufferband PB vorgesehenen Lichtschranke LS1 vorgenommen werden. Dadurch würde die Länge $l'_{FS}$ der Stückgutteile FS unabhängig von deren Breite $b_{FS}$ gemessen.

Die Länge $l_{AB}$ des Abrufbandes AB, reduziert um die Strecke ($b_{AB} * \tan \alpha$), die Beschleunigungsstrecke $l_{ACC}$ sowie die Länge $l'_{FS}$ des Stückgutteils FS ergibt daher die Länge $l_{SYN}$ der Synchronisationsstrecke :

$$l_{SYN} = l_{AB} - b_{AB} * \tan \alpha - l_{ACC} - l'_{FS}$$

Ziel des Synchronisationsvorganges ist es, dass sich das synchronisierte Stückgutteil FS und eine reservierte Kippschale KS nach Abschluss der Synchronisation (Zeitpunkt t5) bezüglich der Richtung des Abnahmeförderers ANF auf gleicher Höhe befinden und mit gleicher Geschwindigkeit $V_{ANF}$ bewegen. Die Einschleusgeschwindigkeit $V_{ES}$ des Abgabeförderers AGF ist daher in Abhängigkeit des Winkels $\alpha$ gewählt, der von den Fördervorrichtungen ANF und AGF einge-

schlossen wird :

$$v_{ES} = v_{ANF} / \cos \alpha$$

Bei der Berechnung des Synchronisationsvorganges ist femer zu berücksichtigen, dass die Kippschale KS, währenddem das Stückgutteil FS innerhalb der Strecke $l_{ACC}$ in der Zeit $t_{ACC}$ beschleunigt wurde, um die Distanz $s_K$ befördert wurde :

$$s_K = v_{ANF} {}^* t_{ACC}$$

Vom Stückgutteil FS ist innerhalb der Synchronisationsstrecke $l_{SYN}$ zusätzlich die Differenz zwischen den von der Kippschale KS und dem Stückgutteil FS in Richtung des Abnahmeförderers ANF innerhalb der Zeit $t_{ACC}$ zurückgelegten Strecken bzw. die Differenzstrecke $s_{diff}$ aufzuholen :

$$s_{diff} = s_K - \cos \alpha * l_{ACC}$$

Die zur Synchronisation zur Verfügung stehende Zeit $t_{SYN}$ (Zeitpunkt t3 bis t5) kann berechnet werden, indem festgestellt wird, wie lange es dauert, bis eine Kippschale KS die zur Synchronisationsstrecke korrespondierende Länge $l_{SYN}$ entlang dem Abnahmeförderer ANF zurückgelegt hat:

$$t_{SYN} = \cos a * l_{SYN} / V_{ANF}$$

Die Strecke, die bei konstanter Beschleunigung a innerhalb der Zeit $t_{SYN}$ durch ein Stückgutteil FS gegenüber einer Kippschale KS aufgeholt werden kann, wird berechnet indem die Zeit $t_{SYN}$ in gleichlange Phasen positiver und negativer Beschleunigung (Zeitpunkte t3 - t4 bzw. t4 - t5) aufgeteilt wird (Beschleunigung von Einschleusgeschwindigkeit $v_{ES}$ auf Maximalgeschwindigkeit beim Umschaltpunkt (Phase 1) und wieder zurück auf Einschleusgeschwindigkeit $v_{ES}$ (Phase 2). Daher kann die aufgeholte Strecke für die erste Phase berechnet und mit zwei multipliziert werden. Die in der Zeit $t_{SYN}$ aufgeholte Strecke $s_{auf}$ umgerechnet auf die Richtung des Abnahmeförderers ANF ist daher :

$$s_{auf} = \cos \alpha * a * (t_{SYN}/2)^2$$

Nach Abschluss der Längenmessung und vor Beginn der Beschleunigungsphase kann ein Stückgutteil FS innerhalb Beschleunigungsstrecke $l_{ACC}$ und der Synchronisationsstrecke $l_{SYN}$ gegenüber einer Kippschale KS total jedoch nur den Abstand bzw. die Strecke $s_{tot}$ aufholen :

$$s_{tot} = s_{auf} - s_{diff}$$

Durch eine Variation der Länge $l_{SYN}$ der Synchronisationsstrecke bzw. der Synchronisationszeit $t_{SYN}$ kann die Aufholstrecke bzw. der aufzuholende Abstand $s_{tot}$ beliebig eingestellt werden. Bei konstanter Beschleunigung a über die gesamte Länge $l_{SYN}$ der Synchronisationsstrecke kann maximal die Strecke $s_{tot}$ = $s_{max}$ aufgeholt werden.

In Fig. 2 eilt die Kippschale KS1 einem Stückgutteil FS um die maximale Strecke $s_{max}$ voraus und kann daher bei konstanter Beschleunigung a noch erreicht werden (Positionierung an der Hinterkante). In Fig. 2 ist femer der Veriauf $vl_{KS1}$ der Geschwindigkeit des Abrufbandes AB1; AB2 bzw. des Stückgutteils FS beim Einschleusvorgang auf die Kippschale KS1 gezeigt. Eine Kippschale KS die weiter als die Strecke $s_{max}$ vorauseilt, kann durch das Stückgutteil FS daher auch bei konstanter Beschleunigung a nicht mehr erreicht werden. Fig. 2 zeigt ferner den Verlauf $vl_{KS0}$ der Geschwindigkeit des Stückgutteils FS beim Einschleusen auf eine Kippschale KS0, die weniger als die Strecke $s_{max}$ vorauseilt. Zum Einholen dieser Kippschale KS0 wird das Stückgutteil FS nur während einer kurzen Zeit $t'_{SYN}$ beschleunigt, die derart gewählt ist, dass die total aufgeholte Strecke $s_{tot}$ :

$$s_{tot} = \cos \alpha * a * (t'_{SYN}/2)^2 - s_{diff}$$

dem Abstand zwischen der Kippschale KS0 und dem Stückgutteil FS (wiederum bezogen auf die Richtung des Abnahmeförderers ANF) entspricht. Durch die Variation der Synchronisationszeit $t'_{SYN}$ kann die Beschleunigung a konstant gehalten werden, was eine einfache technische Realisierung erlaubt. Die Beschleunigung des Stückgutteils FS beginnt daher zum Zeitpunkt t2 und endet vor dem Zeitpunkt t5. Die Beschleunigungsphase kann jedoch auch zu einem späteren Zeitpunkt tx beginnen, sofern sie bis zum Zeitpunkt t5 abgeschlossen werden kann. Die erste Variante wird bevorzugt, wenn bei der Verwendung von mehreren Abrufbändern AB1, AB2, das erste Abrufband AB1 möglichst schnell wieder geräumt werden soll. Dabei ist zu beachten, dass die maximale Synchronisationszeit $t_{SYN}$ von der Länge $l_{FS}$ der Stückgutteile FS abhängt und daher ohnehin von Einschleusvorgang zu Einschleusvorgang ändert. Grundsätzlich können jedoch auch Vorrichtungen mit variabler Beschleunigung eingesetzt werden.

Auch falls ein Stückgutteil FS über längere Zeit auf eine Kippschale KS warten muss, ist es von Vorteil, wenn der Einschleusvorgang nicht unterbrochen wird. In Fig. 2 eilt die Kippschale KS2 einem Stückgutteil FS hintennach und kann daher nur erreicht werden (vorzugsweise Positionierung an der Vorderkante), wenn das Stückgutteil FS verzögert wird. In Fig. 2 ist der entsprechende Verlauf $vl_{KS2}$ der Geschwindigkeit der Abrufbänder AB1, AB2 bzw. des Stückgutteils FS beim Einschleusen auf die Kippschale KS2 gezeigt.

Durch die Verwendung von zwei Abrufbändern AB1, AB2 kann der Einschleusvorgang flexibler gestaltet werden; z.B. kann das erste Abrufband AB1 bereits auf Übemahmegeschwindigkeit $v_{UE}$ eingestellt werden, wenn sich das Stückgutteil FS noch immer auf dem zweiten Abrufband AB2 mit Einschleusgeschwindigkeit $v_{ES}$ befördert wird. Vorzugsweise sind zu diesem Zweck Lichtschranken LS3 bzw. LS3, LS4 vorgesehen, die an die Steuereinheit ST1, ST2 eine entsprechende Meldung abgeben, sobald das Stückgutteil FS das betreffende Band AB bzw. AB1 oder AB2 verlassen hat.

In den obigen Abschnitten wurde zum Zweck der Synchronisation darauf geachtet, dass der Abstand zwischen einem Stückgutteil FS und einer freien Kippschale KS aufgeholt bzw. ausgeglichen wird. Dies kann jedoch auch geschehen, indem festgestellt wird, wie lange es dauert, bis die Kippschale KS an der Stelle eintrifft an der der Synchronisationsvorgang abgeschlossen wird (Fig. 2, Zeitpunkt t5). Diese Zeitdauer $t_{KS}$ entspricht daher genau der Zeit, die zwischen den Zeitpunkten t2 und t5 verstreicht:

$$t_{KS} = t_{ACC} + t_{SYN}$$

Das einzuschleusende Stückgutteil FS ist nach Abschluss der Längenmessung daher so lange zu beschleunigen und wieder zu verzögem, dass nach Ablauf der Zeit $t_{KS}$ = die Strecken $t_{ACC}$ + $t_{SYN}$ durchlaufen und das Einschleusband erreicht ist, wodurch die Synchronisation mit der Kippschale KS erreicht wird.

Durch die EP-A-0 305 755 wird mittels zwei sich in einem bestimmten Winkel schneidenden Uchtschranken eine Zählvorrichtung gesteuert, die in Abhängigkeit der Position der Stückgutteile beim Durchlaufen der Lichtschranken ein Zählergebnis abgibt, durch das eine dazu proportionale Verzögerung $t_{DEL}$ des ansonsten statisch ablaufenden Einschleusvorgangs bewirkt wird. Die am Anfang des Abrufbandes (AB; AB1) vorgesehene Lichtschranke (LS2) kann, bei der Verwendung dieser Messvorrichtung daher auch senkrecht zum Abgabeförderer (AGF) vorgesehen sein. Die Synchronisationsstrecke hat in diesem Fall die Länge $l_{SYN}$ :

$$l_{SYN} = l_{AB} - l_{ACC} - l'_{FS}$$

Die Verzögerung $t_{DEL}$ wird dabei durch eine entsprechende Verkürzung der Synchronisationszeit $t_{SYN}$ berücksichtigt. Einfachheitshalber kann angenommmen werden, dass die nächste freie Kippschale KS einen zeitlichen Abstand $t_{KS}$ + $t_{DEL}$ aufweist. Die Synchronisationzeit $t_{SYN}$ ist daher wie folgt zu berechnen:

$$t_{SYN} = t_{KS} - t_{ACC} + t_{DEL}$$

Das erfindungsgemässe Verfahren ist daher auch für die bekannten Vorrichtungen zum Einschleusen von Stückgutteilen anwendbar.

**Patentansprüche**

**1.** Verfahren zur Steuerung des Vorganges zur Einschleusung von Stückgutteilen (FS), die über einen Abgabeförderer (AGF), der wenigstens ein Pufferband (PB), ein Abrufband (AB; AB1, AB2) und ein Einschleusband (EB) aufweist, an freie Plätze auf einem Abnahmeförderer (ANF) abzugeben sind, der mit konstanter Geschwindigkeit $v_{ANF}$ läuft und zuammen mit dem Abgabeförderer (AGF) einen Winkel $\alpha$ einschliesst und dass der Abgabeförderer (AGF) eine Vorrichtung aufweist, durch die die Länge $l'_{FS}$ eines einzuschleusenden Stückgutteils (FS) gemessen wird und dass folgende Parameter

- der momentanen Stückgutgeschwindigkeit $v_{UE}$
- der Geschwindigkeit $v_{ES}$, mit der das Stückgutteil (FS) nach Abschluss des Beschleunigungsvorgangs an das Einschleusband (EB) abzugeben ist,
- der Länge der Strecke auf dem Abrufband (AB; AB1, AB2), entlang der das Stückgutteil (FS) beschleunigt werden kann, bevor es an das Einschleusband (EB) abzugeben ist sowie
- der Position des nächsten freien Platzes auf dem Abnahmeförderer (ANF),

im Verfahren bekannt sind, **dadurch gekennzeichnet, dass** nach Abschluss der Längenmessung für einen Zeitpunkt t2 anhand der Parameter festgestellt wird, während welcher Zeit $t'_{SYN}$ das Stückgutteil (FS) mit möglichst konstanter Beschleunigung a zu beschleunigen und verzögern bzw. zu verzögern und zu beschleunigen ist, damit es, ohne vorhergehenden Zwischenhalt, bei der Übergabe an das Einschleusband (EB) mit dem nächsten freien Platz auf dem Abnahmeförderer (ANF) synchronisiert werden kann.

**2.** Verfahren nach Anspruch 1, **dadurch gekennzeichnet, dass** die Länge der Strecke auf dem Abrufband (AB; AB1, AB2), entlang der das Stückgutteil (FS) beschleunigt werden kann, bevor es an das Einschleusband (EB) abzugeben ist, anhand

- der gemessenen Stückgutlänge $l'_{FS}$
- der Länge $l_{AB}$ des Abrufbandes (AB; AB1, AB2) sowie
- zumindest annähernd der Länge der Strecke ($b_{AB}$ * tan $\alpha$), die das Stückgutteil (FS) nach der Längenmessung zum Zeitpunkt t2 auf dem Abrufband (AB; AB1, AB2) bereits zurückgelegt hat,

bestimmt wird.

3. Verfahren nach Anspruch 1 oder 2, **dadurch gekennzeichnet, dass** die Beschleunigung a konstant ist und die Synchronisation anhand der Berechnung der Zeit $t'_{SYN}$ erfolgt, die für den Beschleunigungsvorgang aufzuwenden ist.

4. Verfahren nach Anspruch 1, 2 oder 3, **dadurch gekennzeichnet, dass** auf dem Abnahmeförderer (ANF) zur Aufnahme der Stückgutteile (FS) vorgesehene Container bzw. Kippschalen (KS) befördert werden, bezüglich denen das Stückgutteil (FS) vorzugsweise auf die Vorderkante oder, falls die zur Verfügung stehende Synchronisationszeit $t_{SYN}$ zu kurz ist, auf die Hinterkante synchronisiert wird.

5. Verfahren nach Anspruch 1, 2, 3 oder 4, **dadurch gekennzeichnet, dass**, falls die zur Verfügung stehende Synchronisationszeit $t_{SYN}$ zu kurz ist, um eine erste freie Kippschale (KS) zu erreichen, der Synchronisationsvorgang mit Bezug auf die zweite freie Kippschale (KS) erfolgt.

6. Verfahren nach einem der Ansprüche 1 - 5, **dadurch gekennzeichnet, dass** die Berechnung des Synchronisationsvorganges spätestens zu dem Zeitpunkt t2 vorgenommen wird, zu dem das Stückgutteil (FS) eine am Anfang des Abrufbandes (AB; AB1), senkrecht zum Abnahmeförderer (ANF) angeordnete Lichtschranke (LS2) durchlaufen hat oder dass die Lichtschranke (LS2) am Anfang des Abrufbandes (AB; AB1) senkrecht zum Abgabeförderer (AGF) ist und die seitliche Abweichung eines Stückgutteils (FS) gemessen und die dazu entsprechende Verzögerung der Stückgutteile (FS) bei der Berechnung des Synchronisationsvorganges berücksichtigt wird.

7. Verfahren nach einem der Ansprüche 1 - 6, **dadurch gekennzeichnet, dass** die Länge $l'_{FS}$ der einzuschleusenden Stückgutteile (FS) durch die mit einem Zähler (Z) versehene Steuervorrichtung (ST1, ST2) zusammen mit der senkrecht zum Abnahmeförderer (ANF) angeordneten Lichtschranke (LS2) oder zusammen mit einer senkrecht zum Pufferband (PB) angeordneten Lichtschranke (LS1) gemessen wird.

8. Verfahren nach einem der Ansprüche 1 - 7, **dadurch gekennzeichnet, dass** der Synchronisationvorgang auf den Takt des Abnahmeförderers (ANF) sowie dessen Schrittlänge pro Takt abgestimmt wird.

9. Vorrichtung zur Einschleusung von Stückgutteilen (FS), die über einen Abgabeförderer (AGF), der wenigstens ein Pufferband (PB), ein Abrufband (AB; AB1, AB2) und ein Einschleusband (EB) aufweist, an freie Plätze auf einem Abnahmeförderer (ANF) abzugeben sind, der mit konstanter Geschwindigkeit $V_{ANF}$ läuft und zuammen mit dem Abgabeförderer (AGF) einen Winkel $\alpha$ einschliesst und dass der Abgabeförderer (AGF) eine Steuer- und eine Messvorrichtung (ST; LS1; LS2) aufweist, durch die die Länge $l'_{FS}$ eines einzuschleusenden Stückgutteils (FS) messbar ist und dass die folgenden Parameter

- der momentanen Stückgutgeschwindigkeit $v_{UE}$
- der Geschwindigkeit $v_{ES}$, mit der das Stückgutteil (FS) nach Abschluss des Beschleunigungsvorgangs an das Einschleusband (EB) abzugeben ist,
- der Länge der Strecke auf dem Abrufband (AB; AB1, AB2), entlang der das Stückgutteil (FS) beschleunigt werden kann, bevor es an das Einschleusband (EB) abzugeben ist sowie
- der Position des nächsten freien Platzes auf dem Abnahmeförderer (ANF),

im Verfahren verfügbar sind, **dadurch gekennzeichnet, dass** die Steuervorrichtung (ST1; ST2) geeignet ist, nach Abschluss der Längenmessung für einen Zeitpunkt t2 anhand der Parameter zu berechnen, während welcher Zeit $t'_{SYN}$ und mit welcher möglichst konstanten Beschleunigung a das Stückgutteil (FS) zu beschleunigen und verzögern bzw. zu verzögern und zu beschleunigen ist, damit es bei der Übergabe an das Einschleusband (EB) mit dem nächsten freien Platz auf dem Abnahmeförderer (ANF) synchronisiert werden kann.

10. Vorrichtung nach Anspruch 9, **dadurch gekennzeichnet, dass** eine erste senkrecht zum Pufferband (PB) angeordnete Lichtschranke (LS1) und eine zweite senkrecht zum Abnahmeförderer (ANF) angeordnete Lichtschranke (LS2) vorgesehen ist, von denen die erste oder die zweite zur Messung der Länge $l'_{FS}$ eines einzuschleusenden Stückgutteils (FS) vorgesehen ist und von denen die zweite Lichtschranke (LS2) zur Bestimmung des Zeitpunkts t2 vorgesehen ist, zu dem der Synchronisationsvorgang berechnet wird und/oder beginnt oder dass eine erste senkrecht zum Pufferband (PB) angeordnete Lichtschranke (LS1) und eine zweite senkrecht zum Abgabeförderer (AGF) angeordnete Lichtschranke (LS2) sowie eine Vorrichtung zur Messung der seitlichen Abweichung eines Stückgutteils (FS) vorgesehen ist und dass die Steuervorrichtung derart ausgestaltet ist, dass die der seitlichen Abweichung entsprechende Verzögerung der Stückgutteile (FS) bei der Berechnung des Synchronisationsvorganges berücksichtigt wird.

11. Vorrichtung nach Anspruch 9 oder 10, **dadurch gekennzeichnet, dass** die Steuereinheit (ST1; ST2) zur Steuerung des Abrufbandes (AB; AB1, AB2) und des Pufferbandes (PB) geeignet ist.

12. Vorrichtung nach Anspruch 9, 10 oder 11, **dadurch gekennzeichnet, dass** der Abgabeförderer (AGF) zwei separat steuerbare Abrufbänder (AB; AB1, AB2) aufweist, an deren Enden mit der Steuereinheit (ST1; ST2) verbundene Lichtschranken (LS3, LS4) vorgesehen sind.

13. Vorrichtung nach Anspruch 9, 10 oder 11, **dadurch gekennzeichnet, dass** auf dem Abnahmeförderer (ANF) zur Aufnahme der Stückgutteile (FS) dienende ein- oder mehrteilige Container bzw. Kippschalen (KS) vorgesehen sind, bezüglich denen das Stückgutteil (FS) vorzugsweise auf die Vorderkante oder, falls die zur Verfügung stehende Synchronisationszeit $t_{SYN}$ zu kurz ist, auf die Hinterkante oder Schalenmitte synchronisierbar ist.

**Claims**

1. Method for controlling the operation for infeeding parcel items (FS) which are to be delivered by way of a delivery conveyor system (AGF), having at least one buffer belt (PB), one access belt (AB; AB1, AB2) and one infeed belt (EB), to free locations on a take-off conveyor belt (ANF) which runs at constant speed $V_{ANF}$ and together with the delivery conveyor system (AGF) encloses an angle $\alpha$, and that the delivery conveyor system (AGF) has a device by means of which the length $l'_{FS}$ of a parcel item (FS) to be infed is measured, and that the following parameters

   - the present speed $V_{UE}$ of the parcel item
   - the speed $v_{ES}$ at which the parcel item (FS) is to be delivered to the infeed belt (EB) after completion of the acceleration operation,
   - the length of the path on the access belt (AB; AB1, AB2) along which the parcel item (FS) can be accelerated before it is to be delivered to the infeed belt (EB) and
   - the position of the next free location on the take-off conveyor belt (ANF)

   are known in the method, **characterised in that** following completion of the length measurement for a point in time t2 the parameters are used to determine the time $t'_{SYN}$ during which the parcel item (FS) is to be accelerated and decelerated, or decelerated and accelerated, with as constant an acceleration a as possible in order that it can be synchronised without any foregoing intermediate stop with the next free location on the take-off conveyor belt (ANF) with regard to the transfer to the infeed belt (EB).

2. Method according to Claim 1, **characterised in that** the length of the path on the access belt (AB; AB1, AB2) along which the parcel item (FS) can be accelerated before it is to be delivered to the infeed belt (EB) is determined by means of

   - the measured parcel item length $l'_{FS}$
   - the length $l_{AB}$ of the access belt (AB; AB1, AB2) and also
   - at least approximately the length of the path ($b_{AB}$ * tan $\alpha$) which the parcel item (FS) has already travelled on the access belt (AB; AB1, AB2) following the length measurement at time t2.

3. Method according to Claim 1 or 2, **characterised in that** the acceleration a is constant and the synchronisation is carried out by means of the calculation of the time $t'_{SYN}$ which is needed for the acceleration operation.

4. Method according to Claim 1, 2 or 3, **characterised in that** containers or tipping trays (KS) provided for accommodating the parcel items (FS) are transported on the take-off conveyor belt (ANF) and that the parcel item (FS) is preferably synchronised to the leading edge or, if the available synchronisation time $t_{SYN}$ is too short, to the trailing edge with reference to these containers or tipping trays (KS).

5. Method according to Claim 1, 2, 3 or 4, **characterised in that**, if the available synchronisation time $t_{SYN}$ is too short in order to reach a first free tipping tray (KS), the synchronisation operation is performed with reference to the second free tipping tray (KS).

6. Method according to one of Claims 1 to 5, **characterised in that** the calculation for the synchronisation operation is carried out at the latest at the time t2 at which the parcel item (FS) has passed through a light barrier (LS2) located at the beginning of the access belt (AB; AB1) perpendicular to the take-off conveyor belt (ANF) or that the light barrier (LS2) is at the beginning of the access belt (AB; AB1) perpendicular to the delivery conveyor system (AGF) and the lateral deviation of a parcel item (FS) is measured and the corresponding deceleration of the parcel items (FS) is taken into consideration in the calculation for the synchronisation operation.

7. Method according to one of Claims 1 to 6, **characterised in that** the length $l'_{FS}$ of the parcel items (FS) to be infed is measured by means of the control unit (ST1, ST2) provided with a counter (Z) together with the light barrier (LS2) located perpendicular to the take-off conveyor belt (ANF) or together with a light barrier (LS1) located perpendicular to the buffer belt (PB).

8. Method according to one of Claims 1 to 7, **characterised in that** the synchronisation operation is coordinated with the clocking of the take-off conveyor belt (ANF) and the latter's step length per clock pulse.

9. Device for infeeding parcel items (FS) which are to be delivered by way of a delivery conveyor system (AGF), having at least one buffer belt (PB), one access belt (AB; AB1, AB2) and one infeed belt (EB), to free locations on a take-off conveyor belt (ANF) which runs at constant speed $v_{ANF}$ and together with the delivery conveyor system (AGF) encloses an angle $\alpha$, and that the delivery conveyor system (AGF) has a control unit and a measuring device (ST; LS1; LS2) by means of which the length $l'_{FS}$ of a parcel item (FS) to be infed can be measured, and that the following parameters

   - the present speed $v_{UE}$ of the parcel item
   - the speed $v_{ES}$ at which the parcel item (FS) is to be delivered to the infeed belt (EB) after completion of the acceleration operation,
   - the length of the path on the access belt (AB; AB1, AB2) along which the parcel item (FS) can be accelerated before it is to be delivered to the infeed belt (EB) and
   - the position of the next free location on the take-off conveyor belt (ANF)

   are available in the method, **characterised in that** the control unit (ST1; ST2) is suitable, following completion of the length measurement for a point in time t2, for using the parameters to calculate the time $t'_{SYN}$ during which, and with which acceleration a, which is as constant as possible, the parcel item (FS) is to be accelerated and decelerated, or decelerated and accelerated, in order that it can be synchronised with the next free location on the take-off conveyor belt (ANF) with regard to the transfer to the infeed belt (EB).

10. Device according to Claim 9, **characterised in that** a first light barrier (LS1) located perpendicular to the buffer belt (PB) and a second light barrier (LS2) located perpendicular to the take-off conveyor belt (ANF) are provided, the first or second of which is intended for measuring the length $l'_{FS}$ of a parcel item (FS) to be infed, and the second light barrier (LS2) being intended for determining the point in time t2 at which the synchronisation operation is calculated and/or begins, or that a first light barrier (LS1) located perpendicular to the buffer belt (PB) and a second light barrier (LS2) located perpendicular to the delivery conveyor system (AGF) and also a device for measuring the lateral deviation of a parcel item (FS) are provided, and that the control unit is designed such that the deceleration of the parcel items (FS) corresponding to the lateral deviation is taken into consideration during the calculation for the synchronisation operation.

11. Device according to Claim 9 or 10, **characterised in that** the control unit (ST1; ST2) is suitable for controlling the access belt (AB; AB1, AB2) and the buffer belt (PB).

12. Device according to Claim 9, 10 or 11, **characterised in that** the delivery conveyor system (AGF) has two separately controllable access belts (AB; AB1, AB2), at whose ends light barriers (LS3, LS4) connected to the control unit (ST1; ST2) are provided.

13. Device according to Claim 9, 10 or 11, **characterised in that** single-part or multisectional containers or tipping trays are provided on the take-off conveyor belt (ANF) which serve to accommodate the parcel items (FS) and that the parcel item (FS) is preferably synchronised to the leading edge or, if the available synchronisation time $t_{SYN}$ is too short, to the trailing edge or tray centre with reference to these containers or tipping trays (KS).

**Revendications**

1. Procédé pour la commande de l'opération de transfert d'objets (FS), qui sont à délivrer par l'intermédiaire d'un transporteur d'alimentation (AGF), comportant au moins une bande tampon (PB), une bande d'appel (AB ; AB1, AB2) et une bande de transfert (EB), dans des emplacements libres sur un transporteur d'enlèvement (ANF) qui avance à vitesse constante VANF et qui forme avec le transporteur d'alimentation (AGF) un angle $\alpha$, le transporteur d'alimentation (AGF) comportant un dispositif qui mesure la longueur $l'_{FS}$ d'un objet à transférer (FS) et les paramètres suivants

   - la vitesse d'objet instantané $v_{UE}$,
   - la vitesse $v_{ES}$ à laquelle l'objet (FS) est à donner à la bande de transfert (EB) à la fin de l'opération d'accélération,
   - la longueur du tronçon sur la bande d'appel (AB ; AB1, AB2) le long duquel l'objet (FS) peut être accéléré avant de devoir être donné à la bande de transfert (EB),
   - la position du prochain emplacement libre sur le transporteur d'enlèvement (ANF),

étant connus dans le procédé, **caractérisé par le fait que**, après la fin de la mesure de longueur, on détermine pour un instant t2 à l'aide des paramètres pendant combien de temps t'$_{SYN}$ l'objet (FS) est à accélérer et retarder ou à retarder et accélérer avec l'accélération a la plus constante possible pour que, sans arrêt intermédiaire préalable, il puisse être synchronisé, lors de la prise en charge sur la bande de transfert (EB), avec le prochain emplacement libre sur le transporteur d'enlèvement (ANF).

2. Procédé selon la revendication 1, **caractérisé par le fait qu'**on détermine la longueur du tronçon sur la bande d'appel (AB ; AB1, AB2) le long duquel l'objet (FS) peut être accéléré avant d'être donné à la bande de transfert (EB) à l'aide

- de la longueur d'objet l'$_{FS}$ mesurée,
- de la longueur $l_{AB}$ de la bande d'appel (AB ; AB1, AB2) et
- d'au moins approximativement la longueur du tronçon ($b_{AB}$ * tan $\alpha$) que l'objet (FS) a déjà parcourue après la mesure de longueur à l'instant t2 sur la bande d'appel (AB ; AB1, AB2).

3. Procédé selon la revendication 1 ou 2, **caractérisé par le fait que** l'accélération a est constante et que la synchronisation s'effectue à l'aide du calcul du temps t'$_{SYN}$ qui est à utiliser pour l'opération d'accélération.

4. Procédé selon la revendication 1, 2 ou 3, **caractérisé par le fait que** le transporteur d'enlèvement (ANF) transporte des contenants ou bacs basculants (KS) qui sont prévus pour recevoir les objets (FS) et par rapport auxquels l'objet (FS) est synchronisé de préférence sur le bord avant ou, si le temps de synchronisation t$_{SYN}$ disponible est trop court, sur le bord arrière.

5. Procédé selon la revendication 1, 2, 3 ou 4, **caractérisé par le fait que**, si le temps de synchronisation t$_{SYN}$ disponible est trop court pour atteindre un premier bac basculant libre (KS), l'opération de synchronisation s'effectue par rapport au deuxième bac basculant libre (KS).

6. Procédé selon l'une des revendications 1 à 5, **caractérisé par le fait qu'**on effectue le calcul de l'opération de synchronisation au plus tard à l'instant t2 auquel l'objet (FS) a passé une cellule photoélectrique (LS2) placée au début de la bande d'appel (AB ; AB1) perpendiculairement au transporteur d'enlèvement (ANF) ou que la cellule photoélectrique (LS2) au début de la bande d'appel (AB ; AB1) est perpendiculaire au transporteur d'alimentation (AGF), qu'on mesure l'écart latéral d'un objet (FS) et qu'on prend en compte le retard, correspondant à cet écart, de l'objet (FS) lors du calcul de l'opération de synchronisation.

7. Procédé selon l'une des revendications 1 à 6, **caractérisé par le fait qu'**on mesure la longueur l'$_{FS}$ de l'objet à transférer (FS) au moyen du dispositif de commande (ST1, ST2) muni d'un compteur (Z) et conjointement à la cellule photoélectrique (LS2) placée perpendiculairement au transporteur d'enlèvement (ANF) ou conjointement à une cellule photoélectrique (LS1) placée perpendiculairement à la bande tampon (PB).

8. Procédé selon l'une des revendications 1 à 7, **caractérisé par le fait qu'**on règle l'opération de synchronisation sur le cycle du transporteur d'enlèvement (ANF) ainsi que son pas par cycle.

9. Dispositif pour le transfert d'objets (FS), qui sont à délivrer par l'intermédiaire d'un transporteur d'alimentation (AGF), comportant au moins une bande tampon (PB), une bande d'appel (AB ; AB1, AB2) et une bande de transfert (EB), dans des emplacements libres sur un transporteur d'enlèvement (ANF) qui avance à vitesse constante v$_{ANF}$ et qui forme avec le transporteur d'alimentation (AGF) un angle $\alpha$, le transporteur d'alimentation (AGF) comportant un dispositif de commande et de mesure (ST ; LS1 ; LS2) qui peut mesurer la longueur l'$_{FS}$ d'un objet à transférer (FS) et les paramètres suivants

- la vitesse d'objet instantané v$_{UE}$,
- la vitesse v$_{ES}$ à laquelle l'objet (FS) est à donner à la bande de transfert (EB) à la fin de l'opération d'accélération,
- la longueur du tronçon sur la bande d'appel (AB ; AB1, AB2) le long duquel l'objet (FS) peut être accéléré avant de devoir être donné à la bande de transfert (EB),
- la position du prochain emplacement libre sur le transporteur d'enlèvement (ANF),

étant disponibles dans le procédé, **caractérisé par le fait que** le dispositif de commande (ST1 ; ST2) est conçu pour calculer, après la fin de la mesure de longueur, pour un instant t2 et à l'aide des paramètres, pendant combien de temps t'$_{SYN}$ et avec quelle accélération a la plus constante possible l'objet (FS) est à accélérer et retarder ou à retarder et accélérer pour qu'il puisse être synchronisé, lors de la prise en charge sur la bande de transfert (EB), avec le prochain emplacement libre sur le transporteur d'enlèvement (ANF).

10. Dispositif selon la revendication 9, **caractérisé par**

**le fait qu'**il est prévu une première cellule photoélectrique (LS1) placée perpendiculairement à la bande tampon (PB) et une deuxième cellule photoélectrique (LS2) placée perpendiculairement au transporteur d'enlèvement (ANF), la première ou la deuxième cellule photoélectrique étant prévu pour mesurer la longueur l'$_{FS}$ d'un objet à transférer (FS) et la deuxième cellule photoélectrique (LS2) étant prévue pour déterminer l'instant t2 auquel l'opération de synchronisation est calculée et/ou commence, ou qu'il est prévu une première cellule photoélectrique (LS1) placée perpendiculairement à la bande tampon (PB) et une deuxième cellule photoélectrique (LS2) placée perpendiculairement au transporteur d'alimentation (AGF) ainsi qu'un dispositif pour mesurer l'écart latéral d'un objet (FS) et que le dispositif de commande est conçu de telle sorte que le retard, correspondant à l'écart latéral, de l'objet (FS) est pris en compte lors du calcul de l'opération de synchronisation.

11. Dispositif selon la revendication 9 ou 10, **caractérisé par le fait que** l'unité de commande (ST1 ; ST2) est conçue pour commander la bande d'appel (AB ; AB1, AB2) et la bande tampon (PB).

12. Dispositif selon la revendication 9, 10 ou 11, **caractérisé par le fait que** le transporteur d'alimentation (AGF) comporte deux bandes d'appel (AB ; AB1, AB2) qui peuvent être commandées séparément et au bout desquelles il est prévu des cellules photoélectriques (LS3, LS4) reliées à l'unité de commande (ST1 ; ST2).

13. Dispositif selon la revendication 9, 10 ou 11, **caractérisé par le fait qu'**il est prévu sur le transporteur d'enlèvement (ANF) des contenants ou bacs basculants (KS) en une ou plusieurs parties qui servent à recevoir les objets (FS) et par rapport auxquels l'objet (FS) peut être synchronisé de préférence sur le bord avant ou, si le temps de synchronisation t$_{SYN}$ disponible est trop court, sur le bord arrière ou sur le milieu du bac.

Fig. 1

ST1 · i-ks
· t-anf
· tl-anf
· α
· s-ls1
· s-ls2
· s-ls3
Z · c-pb
· c-ab

KS

ANF

$v_{ES}$
$v_{UE}$

t1  t2  t3      t4      t5      t6

AGF

PB

LS1

$l'_{FS}$

LS2

α

$b_{AB} \cdot \tan \alpha$  60°

FS(t2)

$l_{ACC}$

$l_{SYN}$

AB

30°  α

FS(t5)

EB

LS3

$l'_{FS}$

EP 0 790 947 B1

ANF

KS2   KS0 KS1

ST2
← — i-ks
← — t-anf
← — tl-anf
← — α
← — s-ls1
← — s-ls2
← — s-ls3
← — s-ls4
— ► c-pb
— ► c-ab1
— ► c-ab2

Z

$s_{tot}$

$s_{tot} = s_{max}$

LS4   EB

FS(t5)

LS3   AB2

AB1

LS2  60°

LS1

FS(t2)

PB

AGF

$vl_{KS1}$

$vl_{KS0}$

$v_{ES}$

$v_{UE}$

$vl_{KS2}$

$l'_{FS}$  $l_{ACC}$  $l_{SYN}$  $l'_{FS}$

t0  t1  t2  t3  tx  t4  t5  t6

Fig. 2

EP 0 790 947 B1